# FASCICULE DE BREVET EUROPEEN

(11) **EP 1 984 798 B1**
(45) Date de publication et mention de la délivrance du brevet: **21.04.2010**
(21) Numéro de dépôt: 07730959.9
(22) Date de dépôt: 13.02.2007
(51) Int. Cl.: G05D 1/06

(54) **PROCEDE ET SYSTEME D'AIDE AU PILOTAGE D'UN AERONEF**
VERFAHREN UND SYSTEM ZUR STEUERUNG EINES FLUGZEUGES
METHOD AND SYSTEM FOR PILOTING AN AIRCRAFT

(30) Priorité: 14.02.2006 FR 0601280
(43) Date de publication de la demande: 29.10.2008
(73) Titulaire: AIRBUS OPERATIONS (SAS), 31060 Toulouse (FR)
(72) Inventeur: SILLY, Fabien, F-31170 Tournefeuille (FR); LOUISE-BABANDO, Pascale, F-31100 Toulouse (FR); MARKITON, Vincent, F-31470 Fontenilles (FR)
(74) Mandataire: Hauer, Bernard
(86) Numéro de dépôt international: PCT/FR2007/000246
(87) Numéro de publication internationale: WO 2007/093697

(56) Documents cités:
- FR-A- 2 870 520
- FR-A1- 2 864 269
- FR-A1- 2 864 270

## Description

La présente invention concerne un procédé et un système d'aide au pilotage d'un aéronef qui est susceptible de réaliser un vol à basse hauteur.

Dans le cadre de la présente invention, on entend par vol à basse hauteur, le vol le long d'une trajectoire de vol à basse hauteur permettant à l'aéronef de suivre au plus près le terrain survolé, notamment pour éviter de se faire repérer. Une telle trajectoire de vol à basse hauteur est généralement située à une hauteur de terrain prédéterminée, par exemple à 500 pieds (environ 150 mètres).

De plus, une telle trajectoire de vol à basse hauteur est sécurisée par rapport au terrain, c'est-à-dire qu'elle est formée de manière à ce qu'un aéronef qui suit cette trajectoire présente un risque de collision avec le terrain survolé (c'est-à-dire directement avec le sol, ou bien avec un ouvrage ou un élément situé sur le sol) qui est quasiment nul, et en tout cas présente une probabilité inférieure à une valeur prédéterminée très faible, par exemple 10⁻⁹. Par conséquent, si l'aéronef est guidé le long d'une telle trajectoire de vol à basse hauteur, toute collision avec le terrain survolé est hautement improbable.

On sait que lors d'un vol à basse hauteur en visibilité réduite, il peut se présenter des cas d'urgence (panne ou besoin opérationnel par exemple) pour lesquels il est nécessaire d'interrompre la poursuite du vol à basse hauteur et d'amener l'aéronef, définitivement ou temporairement, à une altitude élevée où l'aéronef se trouve en sécurité, à l'abri d'une collision avec le terrain (sol, ouvrage situé sur le sol). Cette altitude est appelée altitude de sécurité. Par le document FR 2870520, on connaît un procédé pour déterminer une telle altitude de sécurité.

Une phase de montée destinée à amener l'aéronef à partir de la trajectoire de vol à basse hauteur à l'altitude de sécurité, n'est pas sans risque. En effet, réaliser par exemple une montée en ligne droite, en conditions de visibilité réduite, n'est pas une procédure satisfaisante, car le vol à basse hauteur étant optimisé pour passer dans les fonds des vallées, au plus près du terrain survolé, effectuer une montée en aveugle en ligne droite est très risqué.

De plus, l'altitude de sécurité est fonction généralement d'une certaine zone géographique et a donc une validité locale et limitée. Ceci est d'autant plus vrai si cette zone est petite et fonction de la trajectoire de vol à basse hauteur, comme par exemple pour l'altitude de sécurité déterminée par le procédé décrit dans la demande de brevet FR-2870520 précitée. Au cours du vol, l'altitude de sécurité varie donc fréquemment.

Par ailleurs, notamment dans le domaine militaire, l'interruption d'un vol à basse hauteur est parfois réalisée en grande urgence de sorte que toute tâche supplémentaire demandée à l'équipage de l'aéronef, telle que sélectionner manuellement une valeur d'altitude de sécurité par exemple, peut constituer une charge de travail excessive dans une telle situation d'urgence.

La présente invention a pour objet de remédier à ces inconvénients. Elle concerne un procédé d'aide au pilotage, qui permet d'amener en toute sécurité un aéronef qui vole le long d'une trajectoire de vol à basse hauteur (qui comporte une trajectoire latérale et une trajectoire verticale et qui est sécurisée par rapport au terrain), à une altitude de sécurité.

A cet effet, selon l'invention, ledit procédé est remarquable en ce que, lors d'un vol de l'aéronef le long de ladite trajectoire de vol à basse hauteur, lorsque l'aéronef doit être amené à une altitude de sécurité, on réalise simultanément les opérations suivantes :
a) dans un plan horizontal, on continue à guider l'aéronef le long de la trajectoire latérale de ladite trajectoire de vol à basse hauteur ; et
b) dans un plan vertical, on soumet l'aéronef à un mode de montée engendrant une montée de l'aéronef selon une pente de montée qui est supérieure ou égale à la pente maximale existant sur la trajectoire verticale de ladite trajectoire de vol à basse hauteur.

Ainsi, grâce à l'invention, comme la phase de montée à l'altitude de sécurité est réalisée avec une pente de montée qui est toujours supérieure (ou égale) à la pente maximale existant sur la trajectoire de vol à basse hauteur, l'aéronef est toujours situé au-dessus de cette trajectoire de vol à basse hauteur. Or, cette dernière étant formée de manière à être sécurisée par rapport au terrain, la trajectoire de montée ainsi suivie par l'aéronef est donc également sécurisée par rapport audit terrain, c'est-à-dire par rapport au sol et à tout obstacle situé sur le sol. Par conséquent, l'aéronef peut rejoindre en toute sécurité ladite altitude de sécurité.

On notera que la trajectoire de montée est toujours située au-dessus et à la verticale de la trajectoire de vol à basse hauteur, en raison du fait que dans le plan horizontal l'aéronef est toujours guidé pendant cette phase de montée suivant la trajectoire latérale (de ladite trajectoire à basse hauteur), et que, par définition, la trajectoire de vol à basse hauteur est sécurisée verticalement uniquement si l'aéronef suit dans le plan horizontal ladite trajectoire latérale.

Par ailleurs, de façon avantageuse, on réalise une synchronisation automatique d'une consigne d'altitude qui est susceptible d'être utilisée par un dispositif de pilotage automatique de l'aéronef, au moment où l'aéronef n'est plus guidé le long de la trajectoire de vol à basse hauteur, sur la valeur courante de l'altitude de sécurité. Ceci évite à l'équipage d'avoir à gérer dans l'urgence une consigne d'altitude au niveau du dispositif de pilotage automatique. Ainsi, la charge de travail usuelle, consistant à lire la valeur de l'altitude de sécurité et à l'afficher sur un moyen d'interface homme/machine du dispositif de pilotage automatique, est supprimée, en particulier lors de la phase de montée à une altitude de sécurité.

Toutefois; pour permettre à l'équipage de rester maître dans cette situation, de façon avantageuse, ladite synchronisation automatique est susceptible d'être annulée par une sélection manuelle d'une valeur particulière d'altitude de sécurité par un pilote de l'aéronef.

De préférence, dans le plan horizontal, on continue (toujours) à guider l'aéronef le long de la trajectoire latérale de ladite trajectoire de vol à basse hauteur, et ceci quel que soit le mode de guidage utilisé, en particulier lors d'une phase de montée vers l'altitude de sécurité, une phase de maintien d'une telle altitude de sécurité ou une éventuelle redescente d'une altitude de sécurité vers la trajectoire à basse hauteur. Cette caractéristique présente de nombreux avantages, comme précisé ci-dessous, et permet en particulier au pilote d'anticiper des changements de valeur de l'altitude de sécurité. En effet, l'altitude de sécurité dépend généralement de la trajectoire latérale et varie donc au fur et à mesure de la poursuite du vol. Comme, grâce à l'invention, l'aéronef est toujours guidé le long de cette trajectoire latérale, le pilote de l'aéronef connaît par avance au travers d'un affichage les différentes valeurs d'altitude de sécurité successives le long de cette trajectoire latérale. Aussi, il lui est possible d'anticiper tout changement de valeur.

En outre, avantageusement, lorsque l'aéronef est guidé le long de la trajectoire latérale de ladite trajectoire de vol à basse hauteur, et ceci quel que soit le guidage vertical :
a) on compare l'altitude courante de l'aéronef à une altitude auxiliaire qui est définie à partir de la trajectoire de vol à basse hauteur et qui représente l'altitude de ladite trajectoire de vol à une position latérale correspondant à la position latérale courante de l'aéronef ; et
b) si ladite altitude courante devient inférieure ou égale à ladite altitude auxiliaire, on fait voler l'aéronef à ladite altitude auxiliaire le long de ladite trajectoire de vol à basse hauteur. Ce retour à un vol à basse hauteur peut être temporaire ou permanent.

Ainsi, on obtient une protection consistant à faire voler l'aéronef à l'altitude la plus haute entre, d'une part, l'altitude courante et, d'autre part, l'altitude auxiliaire relative à la trajectoire de vol à basse hauteur qui est sécurisée par rapport au terrain comme indiqué précédemment. Cette protection permet d'augmenter la sécurité du vol. Elle peut être utilisée dans toute séquence de vol lorsque l'aéronef est guidé le long de la trajectoire latérale de ladite trajectoire de vol à basse hauteur, et ceci quel que soit le guidage vertical. En particulier, cette protection peut être mise en oeuvre lors d'une phase de suivi d'une altitude de sécurité comprenant un maintien de l'altitude de sécurité ou un changement d'altitude de sécurité. Cette protection peut également être mise en oeuvre lors d'un retour vers un vol à basse hauteur afin de capturer et maintenir la trajectoire de vol à basse hauteur.

La présente invention concerne également un système d'aide au pilotage d'un aéronef, du type comportant :
- des moyens de traitement de données, pour déterminer une trajectoire de vol à basse hauteur :
   ■ qui comporte une trajectoire latérale définie dans un plan horizontal et une trajectoire verticale définie dans un plan vertical ; et
   ■ qui est sécurisée par rapport au terrain ;
- des moyens de guidage qui comportent par exemple un dispositif de pilotage automatique et/ou un directeur de vol, qui sont susceptibles de guider l'aéronef le long de ladite trajectoire de vol, et qui sont également susceptibles de l'amener à une altitude de sécurité ; et
- des moyens d'actionnement et de sélection de consigne permettant à un pilote de l'aéronef de commander manuellement au moins un mode de montée et de sélectionner un objectif de guidage (tel que par exemple l'altitude finale désirée).

Selon l'invention, ledit système d'aide au pilotage est remarquable en ce que lesdits moyens de guidage sont formés de manière, lorsqu'ils guident l'aéronef le long de ladite trajectoire de vol à basse hauteur et qu'un mode de montée est commandé par l'intermédiaire desdits moyens d'actionnement :
- dans le plan horizontal, à continuer à guider l'aéronef le long de la trajectoire latérale de ladite trajectoire de vol à basse hauteur ; et
- dans le plan vertical, à soumettre l'aéronef à un mode de montée engendrant une montée de l'aéronef selon une pente de montée qui est supérieure ou égale à la pente maximale existant sur la trajectoire verticale de ladite trajectoire de vol à basse hauteur.

Dans un mode de réalisation particulier, lesdits moyens de guidage comportent un dispositif de pilotage automatique, et ledit système d'aide au pilotage comporte de plus :
- des premiers moyens pour déterminer une valeur courante de l'altitude de sécurité ; et
- des seconds moyens pour permettre, puis réaliser une synchronisation automatique d'une consigne d'altitude susceptible d'être utilisée par lesdits moyens d'actionnement et de sélection de consigne, sur la valeur courante de l'altitude de sécurité déterminée par lesdits premiers moyens, et ceci au moment où l'aéronef n'est plus guidé le long de la trajectoire de vol à basse hauteur.

De plus, avantageusement, ledit système d'aide au pilotage comporte un moyen de sélection manuelle permettant à un pilote de l'aéronef d'annuler l'effet desdits seconds moyens par une sélection manuelle d'une valeur particulière d'altitude.

En outre, avantageusement, lesdits moyens de guidage sont formés de manière à toujours guider l'aéronef, dans le plan horizontal, le long de la trajectoire latérale de ladite trajectoire de vol à basse hauteur.

Par ailleurs, dans un mode de réalisation particulier, ledit système d'aide au pilotage comporte, de plus, un moyen de protection qui est intégré dans lesdits moyens de guidage et qui est formé de manière :
- à comparer l'altitude courante de l'aéronef à une altitude auxiliaire qui est définie à partir de la trajectoire de vol à basse hauteur et qui représente l'altitude de ladite trajectoire de vol à une position latérale correspondant à la position latérale courante de l'aéronef ; et
- si ladite altitude courante devient inférieure ou égale à ladite altitude auxiliaire, à faire voler l'aéronef à ladite altitude auxiliaire le long de ladite trajectoire de vol à basse hauteur.

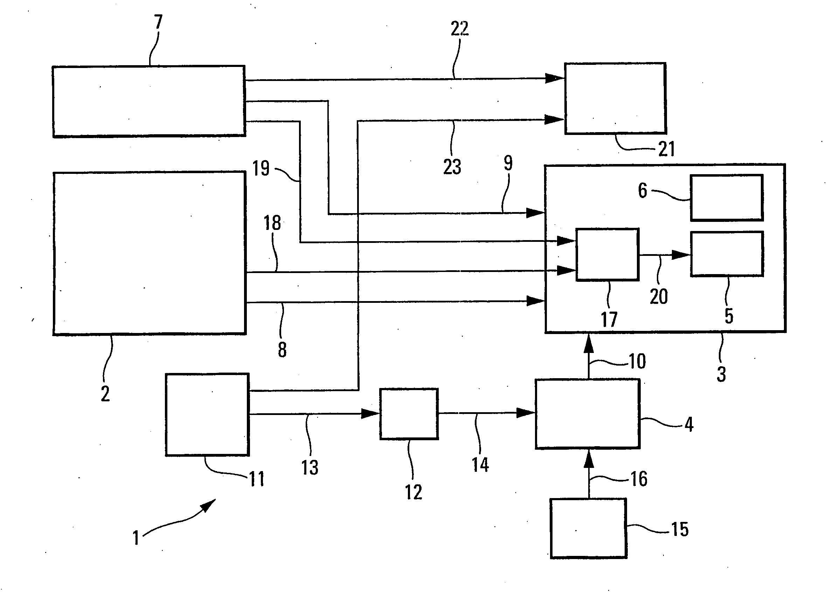

L'unique figure du dessin annexé fera bien comprendre comment l'invention peut être réalisée. Cette figure unique est le schéma synoptique d'un système d'aide au pilotage conforme à l'invention.

Le système 1 conforme à l'invention et représenté schématiquement sur la figure, est destiné à aider un pilote d'un aéronef, en particulier d'un avion de transport militaire, à amener ledit aéronef, lorsqu'il vole le long d'une trajectoire de vol à basse hauteur, en toute sécurité, à une altitude de sécurité où il se trouve par définition à l'abri d'une collision avec le terrain survolé.

Pour ce faire, ledit système 1 est du type comportant :
- des moyens 2 usuels de traitement de données, en particulier un système de gestion de vol par exemple de type FMS ("Flight Management System" en anglais), qui sont destinés à déterminer une trajectoire de vol à basse hauteur comprenant une trajectoire latérale définie dans un plan horizontal et une trajectoire verticale (ou profil de vol) définie dans un plan vertical. Cette trajectoire de vol à basse hauteur est formée de manière à permettre à l'aéronef de suivre au plus près le terrain survolé. De plus, elle est sécurisée par rapport audit terrain survolé, c'est-à-dire qu'elle est formée de manière à ce qu'un aéronef qui suit cette trajectoire présente un risque de collision avec le terrain survolé (c'est-à-dire directement avec le sol, ou bien avec un ouvrage ou un élément situé sur le sol) qui est quasiment nul, et en tout cas présente une probabilité inférieure à une valeur prédéterminée très faible, par exemple 10⁻⁹ ;
- des moyens de guidage 3 qui sont susceptibles de guider l'aéronef le long de ladite trajectoire de vol à basse hauteur, déterminée par lesdits moyens 2, et qui sont également susceptibles d'amener ledit aéronef à une altitude de sécurité ; et
- des moyens d'actionnement et de sélection de consigne 4 qui permettent à un pilote de l'aéronef de commander manuellement au moins un mode de montée particulier, et de sélectionner la consigne d'altitude visée lorsque l'aéronef est guidé le long de ladite trajectoire de vol à basse hauteur ; et
- un ensemble 7 de sources d'informations usuelles, permettant notamment de déterminer des informations telles que la position géographique de l'aéronef, son altitude, les mesures de ses angles de roulis et tangage, et/ou les mesures de vitesse d'accélération dans les différents axes de la mécanique.

Dans un mode de réalisation préféré, lesdits moyens de guidage 3 comportent les moyens suivants, non représentés spécifiquement :
- un moyen de calcul qui est destiné à déterminer de façon usuelle des consignes de pilotage, à partir d'informations reçues desdits moyens 2 par l'intermédiaire d'une liaison 8 et dudit ensemble 7 par l'intermédiaire d'une liaison 9 ;
- au moins un moyen d'aide au pilotage, par exemple un dispositif de pilotage automatique 5 et/ou un directeur de vol 6, qui détermine à partir des consignes de pilotage reçues dudit moyen de calcul des ordres de pilotage de l'aéronef ; et
- des moyens d'actionnement d'organes commandés, tels que par exemple des gouvernes (de direction, de profondeur, ...) de l'aéronef, auxquels on applique les ordres de pilotage ainsi déterminés.

En outre, dans un mode de réalisation particulier, lesdits moyens d'actionnement et de sélection de consigne 4 font, par exemple, partie d'une interface usuelle des moyens 3, auxquels ils sont reliés par l'intermédiaire d'une liaison 10, et permettent au pilote, en plus de sélectionner un mode de montée particulier, de sélectionner également l'un d'une pluralité de modes de guidage différents de l'aéronef, et en particulier un mode de suivi de la trajectoire de vol à basse hauteur.

Selon l'invention, lesdits moyens de guidage 3 sont formés de manière, lorsqu'ils guident l'aéronef le long de ladite trajectoire de vol à basse hauteur et qu'un mode de montée est commandé par l'intermédiaire desdits moyens 4 :
- dans le plan horizontal, à continuer à guider l'aéronef le long de la trajectoire latérale de ladite trajectoire de vol à basse hauteur ; et
- dans le plan vertical, à soumettre l'aéronéf à un mode de montée engendrant une montée de l'aéronef selon une pente de montée qui est supérieure ou égale à la pente maximale existant sur la trajectoire verticale de ladite trajectoire de vol à basse hauteur. Cette pente maximale peut, par exemple, être déterminée par lesdits moyens 2.

Ainsi, grâce au système 1 conforme à l'invention, une phase de montée de l'aéronef à une altitude de sécurité est réalisée avec une pente de montée qui est toujours supérieure (ou égale) à la pente maximale existant sur la trajectoire de vol à basse hauteur. Ainsi, l'aéronef est toujours situé, lors de cette montée, au-dessus de ladite trajectoire de vol à basse hauteur. Or, cette dernière étant formée par les moyens 2 de manière à être sécurisée par rapport au terrain, la trajectoire de montée ainsi suivie par l'aéronef est donc également sécurisée par rapport audit terrain, c'est-à-dire par rapport au sol et à tout obstacle situé sur le sol. Par conséquent, grâce à l'invention, l'aéronef peut rejoindre en toute sécurité ladite altitude de sécurité.

On notera que la trajectoire de montée est toujours située au-dessus de la trajectoire verticale (de la trajectoire de vol à basse hauteur), en raison du fait que dans le plan horizontal l'aéronef est toujours guidé par les moyens de guidage 3 (pendant cette phase de montée) suivant la trajectoire latérale (de ladite trajectoire à basse hauteur), et que, par définition, la trajectoire de vol à basse hauteur est sécurisée verticalement, uniquement si l'aéronef suit dans le plan horizontal la trajectoire latérale de cette trajectoire de vol.

On notera que, lors d'un suivi de la trajectoire de vol à basse hauteur, le moyen d'aide au pilotage desdits moyens de guidage 3 (par exemple le dispositif de pilotage automatique 5, ou le directeur de vol 6, associé ou non à un moyen non représenté mettant en oeuvre un mode d'auto-poussée) réalise le suivi de la trajectoire de vol à basse hauteur, qui est déterminée par les moyens 2, au travers d'un mode combinant des lois de guidage horizontal et vertical. Lorsque le pilote agit, par exemple, sur un sélecteur d'altitude d'un panneau de commande intégré dans les moyens 4, le dispositif de pilotage automatique 5 change de loi de guidage vertical et de commande de la poussée des moteurs, pour réaliser les objectifs suivants : mise en poussée des moteurs vers la poussée maximale et maintien de la vitesse de consigne. Comme autre possibilité pour le pilote, on peut prévoir qu'il pousse les manettes de gaz jusqu'au cran maximum. La poussée maximale est alors demandée aux moteurs, et un mode et une loi de maintien de vitesse permettent de faire monter l'aéronef avec le taux maximal à la vitesse courante.

Dans les deux exemples précédents, la pente obtenue est toujours supérieure ou égale à celle de la trajectoire de vol à basse hauteur déterminée par les moyens 2. Dans ces deux exemples, les moyens de guidage 3 maintiennent, dans le plan horizontal, l'asservissement sur la trajectoire latérale, comme indiqué précédemment, ce qui transfère au mode de montée la protection dont bénéficie la trajectoire de vol à basse hauteur vis-à-vis du sol et des obstacles éventuels.

Dans un mode de réalisation particulier, ledit système 1 comporte, de plus :
- des moyens usuels 11 pour déterminer une valeur courante de l'altitude de sécurité. Ces moyens 11 peuvent déterminer cette valeur courante de l'altitude de sécurité, de façon usuelle, à partir de ladite trajectoire latérale ; et
- des moyens usuels 12 qui sont reliés par l'intermédiaire d'une liaison 13 auxdits moyens 11 et qui sont formés de manière à réaliser une synchronisation automatique d'une consigne d'altitude susceptible d'être utilisée par les moyens d'actionnement et de sélection de consigne 4 (auxquels lesdits moyens 12 sont reliés par l'intermédiaire d'une liaison 14) sur la valeur courante de l'altitude de sécurité déterminée par lesdits moyens 11, et ceci au moment où l'aéronef n'est plus guidé le long de la trajectoire de vol à basse hauteur.

Ce mode de réalisation particulier évite à l'équipage d'avoir à gérer dans l'urgence une consigne d'altitude au niveau des moyens d'actionnement et de sélection de consigne 4. Ainsi, la charge de travail usuelle, consistant à lire la valeur de l'altitude de sécurité et à l'afficher sur un moyen d'interface usuel homme/machine des moyens d'actionnement et de sélection de consigne 4, est supprimée, en particulier lors de la phase de montée à une altitude de sécurité.

Dans un mode de réalisation particulier, lesdits moyens 11 sont intégrés dans lesdits moyens 2 et lesdits moyens 12 sont intégrés dans lesdits moyens de guidage 3. Dans ce cas, on réalise une synchronisation automatique de la valeur utilisée par les moyens d'actionnement et de sélection de consigne 4 sur une valeur connue par les moyens 2, par exemple un système de gestion de vol de l'aéronef.

Cette synchronisation automatique est armée par l'équipage, en prévision de ce besoin, lors d'une procédure d'entrée dans un vol à basse hauteur. Pour ce faire, un moyen d'armement particulier non représenté (par exemple un bouton-poussoir ou une position instable d'un rotacteur, comme par exemple une couronne autour d'un sélecteur d'altitude usuel qui permet de sélectionner le pas de variation) engendre, au niveau d'un afficheur de l'altitude sélectée des moyens d'actionnement et de sélection de consigne 4, le remplacement de la valeur numérique habituellement sélectée par un libellé ou signe particulier qui indique l'armement de cette synchronisation automatique. A partir du moment où cet armement est réalisé, toute sortie du mode de guidage vertical sur la trajectoire de vol à basse hauteur provoque l'affichage dans une fenêtre de sélection d'altitude particulière de la valeur courante de l'altitude de sécurité, ce qui correspond à la réalisation de la synchronisation précitée. La valeur ainsi affichée joue alors le rôle habituel d'une sélection d'altitude, notamment pour conditionner une montée et une capture de cette altitude.

Par ailleurs, pour permettre à l'équipage de rester maître dans une telle situation, le système 1 conforme à l'invention comporte, de plus, un moyen de sélection manuel 15 qui est relié par l'intermédiaire d'une liaison 16 auxdits moyens 4 et qui permet à un pilote de l'aéronef d'annuler l'effet desdits moyens 12 par une sélection manuelle d'une valeur particulière d'altitude de sécurité.

Dans un mode de réalisation particulier, ledit moyen de sélection manuelle 15 est intégré dans lesdits moyens 4.

Par ailleurs, dans un mode de réalisation préféré, lesdits moyens de guidage 3 sont également formés de manière à toujours guider l'aéronef le long de la trajectoire latérale de ladite trajectoire de vol à basse hauteur, et ceci quelle que soit la phase de vol (ou le mode de guidage utilisé), que ce soit par exemple une phase de montée vers une altitude de sécurité, une phase de maintien d'une telle altitude de sécurité, ou une éventuelle redescente d'une altitude de sécurité vers une trajectoire de vol à basse hauteur. Dans ce mode de réalisation préféré, le pilote peut anticiper des changements de valeur de l'altitude de sécurité grâce à des moyens d'affichage 21 du profil d'altitude de sécurité le long de la trajectoire à basse hauteur, moyens d'affichage 21 qui sont reliés auxdits moyens 7 et 11 par l'intermédiaire de liaisons 22 et 23. En effet, l'altitude de sécurité dépend généralement de la trajectoire latérale et varie donc au fur et à mesure de la poursuite du vol. Comme dans ce mode de réalisation préféré, l'aéronef est toujours guidé le long de cette trajectoire latérale, le pilote de l'aéronef connaît par avance les différentes valeurs successives de l'altitude de sécurité le long de cette trajectoire latérale. Ainsi, il lui est possible d'anticiper sans problème tout changement de valeur.

Par ailleurs, le système 1 conforme à l'invention comporte, de plus, un moyen de protection 17 qui est intégré dans les moyens de guidage 3, qui est relié par l'intermédiaire de liaisons 18, 19 et 20 respectivement auxdits moyens 2, auxdits moyens 7 et audit dispositif de pilotage automatique 5, et qui est formé de manière :
- à comparer l'altitude courante de l'aéronef, reçue desdits moyens 7, à une altitude auxiliaire qui est reçue desdits moyens 2, qui est définie à partir de la trajectoire de vol à basse hauteur, et qui représente l'altitude de ladite trajectoire de vol à une position latérale correspondant à la position latérale courante de l'aéronef. Pour ce faire, ladite position latérale courante de l'aéronef est déterminée préalablement de façon usuelle ; et
- dès que ladite altitude courante devient inférieure ou égale à ladite altitude auxiliaire, à faire voler l'aéronef à ladite altitude auxiliaire le long de ladite trajectoire de vol à basse hauteur.

Ainsi, ledit moyen de protection 17 fournit une protection (par rapport à un risque de collision avec le terrain survolé) qui consiste à faire voler l'aéronef à l'altitude la plus haute entre, d'une part, l'altitude courante et, d'autre part, l'altitude auxiliaire relative à la trajectoire de vol à basse hauteur. Cette altitude auxiliaire étant par définition sécurisée par rapport au terrain comme indiqué précédemment, la protection ainsi obtenue permet donc d'augmenter la sécurité du vol. Cette protection peut être mise en oeuvre lorsque l'aéronef est guidé le long de la trajectoire latérale de ladite trajectoire de vol à basse hauteur, et ceci quel que soit le guidage vertical. En particulier, cette protection peut être mise en oeuvre lors d'une phase de suivi d'une altitude de sécurité comprenant un maintien de l'altitude de sécurité ou un changement d'altitude de sécurité. Cette protection peut également être mise en oeuvre lors d'un retour vers un vol à basse hauteur, afin de capturer et maintenir la trajectoire de vol à basse hauteur.

On notera que deux variantes de mise en oeuvre sont possibles, dès lors que le moyen de protection 17 est activé, à savoir :
- l'activation de la protection provoque un réengagement du maintien de la trajectoire de vol à basse hauteur. Dans ce cas, une interface homme/machine annonce ce réengagement. Cette option est choisie par l'équipage, lorsque la protection est activée, par exemple en appuyant sur un bouton-poussoir d'armement du vol à basse hauteur ;
- la protection est réversible. Elle est annoncée au niveau de l'interface homme/machine comme temporaire. Dans ce cas, la loi de guidage initiale redevient active lorsque la protection n'est plus nécessaire.

Le système 1 d'aide au pilotage, conforme à l'invention, permet de fournir à l'équipage de l'aéronef, lors d'un vol à basse hauteur, pour lequel la trajectoire de vol en trois dimensions est déterminée par un système de gestion de vol (moyens 2), une assistance des moyens de guidage 3 pour rejoindre le cas échéant une altitude de sécurité, pour gérer la poursuite du vol à cette altitude de sécurité, et si besoin pour redescendre à basse hauteur, tout en gardant pour ces phases de vol particulières le niveau de sécurité existant pour sécuriser le vol à basse hauteur.

## Revendications

1. Procédé d'aide au pilotage d'un aéronef qui est susceptible de voler le long d'une trajectoire de vol à basse hauteur, ladite trajectoire de vol comportant une trajectoire latérale et une trajectoire verticale et étant sécurisée par rapport au terrain, et qui est susceptible d'être amené à une altitude de sécurité,
**caractérisé en ce que**, lors d'un vol de l'aéronef le long de ladite trajectoire de vol à basse hauteur, lorsque l'aéronef doit être amené à une altitude de sécurité, on réalise simultanément les opérations suivantes :
a) dans un plan horizontal, on continue à guider l'aéronef le long de la trajectoire latérale de ladite trajectoire de vol à basse hauteur ; et
b) dans un plan vertical, on soumet l'aéronef à un mode de montée engendrant une montée de l'aéronef selon une pente de montée qui est supérieure ou égale à la pente maximale existant sur la trajectoire verticale de ladite trajectoire de vol à basse hauteur.

2. Procédé selon la revendication 1,
**caractérisé en ce que**, dès que l'aéronef n'est plus guidé le long de la trajectoire de vol à basse hauteur, on réalise une synchronisation automatique d'une consigne d'altitude qui est susceptible d'être utilisée par un dispositif de pilotage automatique de l'aéronef, sur une valeur courante de l'altitude de sécurité.

3. Procédé selon la revendication 2,
**caractérisé en ce que** ladite synchronisation automatique est susceptible d'être annulée par une sélection manuelle d'une valeur particulière d'altitude de sécurité par un pilote de l'aéronef.

4. Procédé selon l'une des revendications 1 à 3,
**caractérisé en ce que**, dans le plan horizontal, on continue toujours à guider l'aéronef le long de la trajectoire latérale de ladite trajectoire de vol à basse hauteur, et ceci quel que soit le mode de guidage utilisé.

5. Procédé selon la revendication 4,
**caractérisé en ce que**, lorsque l'aéronef est guidé le long de la trajectoire latérale de ladite trajectoire de vol à basse hauteur, et ceci quel que soit le guidage vertical :
a) on compare l'altitude courante de l'aéronef à une altitude auxiliaire qui est définie à partir de la trajectoire de vol à basse hauteur et qui représente l'altitude de ladite trajectoire de vol à une position latérale correspondant à la position latérale courante de l'aéronef ; et
b) si ladite altitude courante devient inférieure ou égale à ladite altitude auxiliaire, on fait voler l'aéronef à ladite altitude auxiliaire le long de ladite trajectoire de vol à basse hauteur.

6. Système d'aide au pilotage d'un aéronef, ledit système (1) comportant :
- des moyens de traitement de données (2) pour déterminer une trajectoire de vol à basse hauteur :
■ qui comporte une trajectoire latérale définie dans un plan horizontal et une trajectoire verticale définie dans un plan vertical ; et
■ qui est sécurisée par rapport au terrain;
- des moyens de guidage (3) qui sont susceptibles de guider l'aéronef le long de ladite trajectoire de vol et qui sont susceptibles de l'amener à une altitude de sécurité ; et
- des moyens d'actionnement et de sélection de consigne (4) permettant à un pilote de l'aéronef de commander manuellement au moins un mode de montée,
**caractérisé en ce que** lesdits moyens de guidage (3) sont formés de manière, lorsqu'ils guident l'aéronef le long de ladite trajectoire de vol à basse hauteur et qu'un mode de montée est commandé par l'intermédiaire desdits moyens d'actionnement et de sélection de consigne (4) :
- dans le plan horizontal, à continuer à guider l'aéronef le long de la trajectoire latérale de ladite trajectoire de vol à basse hauteur ; et
- dans le plan vertical, à soumettre l'aéronef à un mode de montée engendrant une montée de l'aéronef selon une pente de montée qui est supérieure ou égale à la pente maximale existant sur la trajectoire verticale de ladite trajectoire de vol à basse hauteur.

7. Système selon la revendication 6,
**caractérisé en ce que** lesdits moyens de guidage (3) comportent un dispositif de pilotage automatique (5), commandé au travers desdits moyens d'actionnement et de sélection de consigne (4), et **en ce que** ledit système (1) comporte de plus :
- des premiers moyens (11) pour déterminer une valeur courante de l'altitude de sécurité ; et
- des seconds moyens (12) pour réaliser une synchronisation automatique d'une consigne d'altitude susceptible d'être utilisée par lesdits moyens d'actionnement et de sélection de consigne (4), sur la valeur courante de l'altitude de sécurité déterminée par lesdits premiers moyens (11), et ceci au moment où l'aéronef n'est plus guidé le long de la trajectoire de vol à basse hauteur.

8. Système selon la revendication 7,
**caractérisé en ce qu'**il comporte, de plus, un moyen de sélection manuelle (15) permettant à un pilote de l'aéronef d'annuler l'effet desdits seconds moyens (12) par une sélection manuelle d'une valeur particulière d'altitude.

9. Système selon l'une quelconque des revendications 6 à 8,
**caractérisé en ce que** lesdits moyens de guidage (3) sont formés de manière à toujours guider l'aéronef, dans le plan horizontal, le long de la trajectoire latérale de ladite trajectoire de vol à basse hauteur.

10. Système selon la revendication 9,
**caractérisé en ce qu'**il comporte, de plus, un moyen de protection (17) qui est intégré dans lesdits moyens de guidage (3) et qui est formé de manière :
- à comparer l'altitude courante de l'aéronef à une altitude auxiliaire qui est définie à partir de la trajectoire de vol à basse hauteur et qui représente l'altitude de ladite trajectoire de vol à une position latérale correspondant à la position latérale courante de l'aéronef ; et
- si ladite altitude courante devient inférieure ou égale à ladite altitude auxiliaire, à faire voler l'aéronef à ladite altitude auxiliaire le long de ladite trajectoire de vol à basse hauteur.

11. Aéronef,
**caractérisé en ce qu'**il comporte un système (1) tel que celui spécifié sous l'une quelconque des revendications 6 à 10.

## Claims

1. A method for aiding the piloting of an aircraft which is capable of flying along a low-height flight trajectory, said flight trajectory comprising a lateral trajectory and a vertical trajectory and being made safe with respect to the terrain, and which is capable of being brought to a safety altitude,
**characterized in that**, during a flight of the aircraft along said low-height flight trajectory, when the aircraft must be brought to a safety altitude, the following operations are carried out simultaneously:
a) in a horizontal plane, the aircraft continues to be guided along the lateral trajectory of said low-height flight trajectory; and
b) in a vertical plane, the aircraft is subjected to a climb mode causing the aircraft to climb according to a climb slope which is greater than or equal to the maximum slope existing on the vertical trajectory of said low-height flight trajectory.

2. The method as claimed in claim 1,
**characterized in that**, as soon as the aircraft is no longer guided along the low-height flight trajectory, an automatic synchronization of an altitude setpoint which is capable of being used by an automatic piloting device of the aircraft with a current value of the safety altitude is carried out.

3. The method as claimed in claim 2,
**characterized in that** said automatic synchronization is capable of being cancelled by manual selection of a particular safety altitude value by a pilot of the aircraft.

4. The method as claimed in one of claims 1 to 3,
**characterized in that**, in the horizontal plane, the aircraft continues always to be guided along the lateral trajectory of said low-height flight trajectory, whatever guidance mode is used.

5. The method as claimed in claim 4,
**characterized in that**, when the aircraft is guided along the lateral trajectory of said low-height flight trajectory, whatever the vertical guidance:
a) the current altitude of the aircraft is compared with an auxiliary altitude which is defined on the basis of the low-height flight trajectory and which represents the altitude of said flight trajectory at a lateral position corresponding to the current lateral position of the aircraft; and
b) if said current altitude becomes less than or equal to said auxiliary altitude, the aircraft is flown at said auxiliary altitude along said low-height flight trajectory.

6. A system for aiding the piloting of an aircraft, said system (1) comprising:
- data processing means (2) for determining a low-height flight trajectory:
• which comprises a lateral trajectory defined in a horizontal plane and a vertical trajectory defined in a vertical plane; and
• which is made safe with respect to the terrain;
- guidance means (3) which are capable of guiding the aircraft along said flight trajectory and which are capable of bringing it to a safety altitude; and
- setpoint actuation and selection means (4) allowing a pilot of the aircraft to manually control at least one climb mode,
**characterized in that** said guidance means (3) are formed in such a way as, when they guide the aircraft along said low-height flight trajectory and a climb mode is controlled by way of said setpoint actuation and selection means (4):
- in the horizontal plane, to continue to guide the aircraft along the lateral trajectory of said low-height flight trajectory; and
- in the vertical plane, to subject the aircraft to a climb mode causing the aircraft to climb according to a climb slope which is greater than or equal to the maximum slope existing on the vertical trajectory of said low-height flight trajectory.

7. The system as claimed in claim 6,
**characterized in that** said guidance means (3) comprise an automatic piloting device (5), controlled through said setpoint actuation and selection means (4), and **in that** said system (1) comprises moreover:
- first means (11) for determining a current value of the safety altitude; and
- second means (12) for carrying out an automatic synchronization of an altitude setpoint capable of being used by said setpoint actuation and selection means (4), with the current value of the safety altitude determined by said first means (11), doing so at the moment at which the aircraft is no longer guided along the low-height flight trajectory.

8. The system as claimed in claim 7,
**characterized in that** it comprises, moreover, a manual selection means (15) allowing a pilot of the aircraft to cancel the effect of said second means (12) by manual selection of a particular altitude value.

9. The system as claimed in any one of claims 6 to 8,
**characterized in that** said guidance means (3) are formed so as to always guide the aircraft, in the horizontal plane, along the lateral trajectory of said low-height flight trajectory.

10. The system as claimed in claim 9,
**characterized in that** it comprises, moreover, a protection means (17) which is integrated into said guidance means (3) and which is formed in such a way as:
- to compare the current altitude of the aircraft with an auxiliary altitude which is defined on the basis of the low-height flight trajectory and which represents the altitude of said flight trajectory at a lateral position corresponding to the current lateral position of the aircraft; and
- if said current altitude becomes less than or equal to said auxiliary altitude, to fly the aircraft at said auxiliary altitude along said low-height flight trajectory.

11. An aircraft,
**characterized in that** it comprises a system (1) such as that specified under any one of claims 6 to 10.

## Patentansprüche

1. Verfahren zur Steuerungshilfe eines Luftfahrzeugs, das einer Flugbahn auf niedriger Höhe folgen kann, wobei die Flugbahn eine seitliche Bahn und eine senkrechte Bahn umfasst und im Verhältnis zum Gelände abgesichert ist, und das auf eine Sicherheitshöhe gebracht werden kann,
**dadurch gekennzeichnet, dass** bei einem Flug des Luftfahrzeugs auf der Flugbahn auf niedriger Höhe, wenn das Luftfahrzeug auf eine Sicherheitshöhe gebracht werden muss, gleichzeitig folgende Arbeitsgänge ausgeführt werden:
a) in einer waagerechten Ebene Weiterführen des Luftfahrzeugs auf der seitlichen Bahn der Flugbahn auf niedriger Höhe; und
b) in einer senkrechten Ebene Versetzen des Luftfahrzeugs in einen Steigflugmodus, der einen Steigflug des Luftfahrzeugs gemäß einer Steigflugneigung erzeugt, die größer oder gleich der größten Neigung ist, die auf der senkrechten Bahn der Flugbahn auf niedriger Höhe vorliegt.

2. Verfahren nach Anspruch 1,
**dadurch gekennzeichnet, dass** sobald das Luftfahrzeug nicht mehr auf der Flugbahn auf niedriger Höhe geführt wird, eine automatische Synchronisierung einer Höhenanweisung, die von einer automatischen Steuerungsvorrichtung des Luftfahrzeugs verwendet werden kann, mit einem laufenden Wert der Sicherheitshöhe vorgenommen wird.

3. Verfahren nach Anspruch 2,
**dadurch gekennzeichnet, dass** die automatische Synchronisierung durch eine manuelle Auswahl eines bestimmten Sicherheitshöhenwerts durch einen Piloten des Luftfahrzeugs aufgehoben werden kann.

4. Verfahren nach einem der Ansprüche 1 und 3,
**dadurch gekennzeichnet, dass** in der waagerechten Ebene das Luftfahrzeug weiter auf der seitlichen Bahn der Flugbahn auf niedriger Höhe geführt wird, und zwar unabhängig von dem verwendeten Führungsmodus.

5. Verfahren nach Anspruch 4,
**dadurch gekennzeichnet, dass** wenn das Luftfahrzeug auf der seitlichen Bahn der Flugbahn auf niedriger Höhe geführt wird, und zwar unabhängig von der senkrechten Führung:
a) die laufende Höhe des Luftfahrzeugs mit einer Hilfshöhe verglichen wird, die von der Flugbahn auf niedriger Höhe aus definiert wird und welche die Höhe der Flugbahn in einer seitlichen Position darstellt, die der seitlichen laufenden Position des Luftfahrzeugs entspricht; und
b) wenn die laufende Höhe kleiner oder größer als die Hilfshöhe wird, das Luftfahrzeug auf der Hilfshöhe auf der Flugbahn auf niedriger Höhe geflogen wird.

6. System zur Steuerungshilfe eines Luftfahrzeugs, wobei das System (1) folgendes umfasst:
- Mittel zum Verarbeiten von Daten (2), um eine Flugbahn auf niedriger Höhe zu bestimmen:
• die eine seitliche Bahn, die in einer waagerechten Ebene definiert ist, und eine senkrechte Bahn, die in einer senkrechten Ebene definiert ist, umfasst; und
• die im Verhältnis zum Gelände abgesichert ist;
- Führungsmittel (3), die das Luftfahrzeug auf der Flugbahn führen können und die es auf eine Sicherheitshöhe bringen können; und
- Mittel (4) zum Betätigen und zum Auswählen einer Anweisung, die es einem Piloten des Luftfahrzeugs ermöglichen, mindestens einen Steigflugmodus manuell zu steuern,
**dadurch gekennzeichnet, dass** die Führungsmittel (3) derart gebildet sind, dass wenn sie das Luftfahrzeug auf der Flugbahn auf niedriger Höhe führen und ein Steigflugmodus über die Betätigungs- und Anweisungsauswahlmittel (4) gesteuert wird:
- in der waagerechten Ebene das Luftfahrzeug weiter auf der seitlichen Bahn der Flugbahn auf niedriger Höhe geführt wird; und
- in der senkrechten Ebene das Luftfahrzeug in einen Steigflugmodus versetzt wird, der einen Steigflug des Luftfahrzeugs gemäß einer Steigflugneigung erzeugt, die größer oder gleich der größten Neigung ist, die auf der senkrechten Bahn der Flugbahn auf niedriger Höhe vorliegt.

7. System nach Anspruch 6,
**dadurch gekennzeichnet, dass** die Führungsmittel (3) eine automatische Steuerungsvorrichtung (5) umfassen, die über die Betätigungs- und Anweisungsauswahlmittel (4) gesteuert wird, und dass das System (1) zudem folgendes umfasst:
- erste Mittel (11), um einen laufenden Wert der Sicherheitshöhe zu bestimmen; und
- zweite Mittel (12), um eine automatische Synchronisierung einer Höhenanweisung, die von den Betätigungs- und Anweisungsauswahlmitteln (4) verwendet werden kann, mit dem laufenden Wert der Sicherheitshöhe, der von den ersten Mitteln (11) bestimmt wird, durchzuführen, und zwar zu dem Zeitpunkt, zu dem das Luftfahrzeug nicht mehr auf der Flugbahn auf niedriger Höhe geführt wird.

8. System nach Anspruch 7,
**dadurch gekennzeichnet, dass** es zudem ein Mittel zur manuellen Auswahl (15) umfasst, das es einem Piloten des Luftfahrzeugs ermöglicht, die Wirkung der zweiten Mittel (12) durch eine manuelle Auswahl eines bestimmten Höhenwerts aufzuheben.

9. System nach einem der Ansprüche 6 bis 8, **dadurch gekennzeichnet, dass** die Führungsmittel (3) derart gebildet sind, dass sie das Luftfahrzeug in der waagerechten Ebene immer auf der seitlichen Bahn der Flugbahn auf niedriger Höhe führen.

10. System nach Anspruch 9,
**dadurch gekennzeichnet, dass** es zudem ein Schutzmittel (17) umfasst, das in die Führungsmittel (3) integriert ist und das derart gebildet ist:
- dass es die laufende Höhe des Luftfahrzeugs mit einer Hilfshöhe vergleicht, die von der Flugbahn auf niedriger Höhe aus definiert wird und welche die Höhe der Flugbahn in einer seitlichen Position darstellt, die der seitlichen laufenden Position des Luftfahrzeugs entspricht; und
- wenn die laufende Höhe kleiner oder größer als die Hilfshöhe wird, das Luftfahrzeug auf der Hilfshöhe auf der Flugbahn auf niedriger Höhe geflogen wird.

11. Luftfahrzeug,
**dadurch gekennzeichnet, dass** es ein System (1) umfasst, wie es in einem der Ansprüche 6 bis 10 angegeben wird.
